# EUROPEAN PATENT APPLICATION

(11) **EP 4 786 073 A2**
(43) Date of publication of application: **05.08.2026**
(21) Application number: 25196473.0
(22) Date of filing: 18.08.2025
(51) Int. Cl.: B22F 3/105, B22F 3/12, B22F 5/00, B22F 7/08, C22C 14/00, H01M 8/0208, H01M 8/0206, H01M 8/0247, H01M 8/0258, B32B 15/01, H01M 8/0228, H01M 8/0254, C22C 21/02

(54) **MANUFACTURING MULTI-LAYERED BIPOLAR PLATE FOR FUEL CELL**

(30) Priority: 18.10.2024 US 202418920256
(71) Applicant: RTX Corporation, Farmington, CT 06032 (US)
(72) Inventor: ZHU, Tianli, Glastonbury, 06033 (US); EL-WARDANY, Tahany, Vernon, 06066 (US); CALDWELL, Dustin, Portland, 06480 (US)
(74) Representative: Dehns

(57) **Abstract**

A method of manufacture is provided during which a first material layer (62A) is disposed with a second material layer (64) to provide a multi-layered preform (60). The first material layer (62A) lengthwise and widthwise overlaps the second material layer (64). The first material layer (62A) is configured from or otherwise includes a titanium material. The second material layer (64) is configured from or otherwise includes an aluminum material. The multi-layered preform (60) is clamped between a first die (66) and a second die (68). The first die (66) and the second die (68) each lengthwise and widthwise overlap the multi-layered preform (60). The multi-layered preform (60) clamped between the first die (66) and the second die (68) is sintered and bonded to provide a bipolar plate (36; 38) for a fuel cell (28). The titanium material in the first material layer (62A) of the bipolar plate (36; 38) is bonded to the aluminum material in the second material layer (64) of the bipolar plate (36; 38) during the sintering of the multi-layered preform (60).

## Description

### BACKGROUND OF THE DISCLOSURE

### 1. Technical Field

This disclosure relates generally to a fuel cell and, more particularly, to manufacturing a bipolar plate for the fuel cell.

### 2. Background Information

Various fuel cell types and configurations are known in the art. Various methods are also known for manufacturing fuel cell components. While these known manufacturing methods have various benefits, there is still room in the art for improvement such as reducing weight and costs of fuel cell components.

### SUMMARY OF THE DISCLOSURE

According to an aspect of the present disclosure, a method of manufacture is provided during which a first material layer is disposed with a second material layer to provide a multi-layered preform. The first material layer lengthwise and widthwise overlaps the second material layer. The first material layer is configured from or otherwise includes a titanium material. The second material layer is configured from or otherwise includes an aluminum material. The multi-layered preform is clamped between a first die and a second die. The first die and the second die each lengthwise and widthwise overlap the multi-layered preform. The multi-layered preform clamped between the first die and the second die is sintered and bonded to provide a bipolar plate for a fuel cell. The titanium material in the first material layer of the bipolar plate is bonded to the aluminum material in the second material layer of the bipolar plate during the sintering of the multi-layered preform.

According to another aspect of the present disclosure, another method of manufacture is provided during which a multi-layered preform is pressed between a first die and a second die to provide a shaped multi-layered preform. The shaped multi-layered preform includes a first material layer and a second material layer. The first material layer extends longitudinally and laterally along the second material layer. The first material layer contacts the first die and is configured from or otherwise includes a titanium material. The second material layer contacts the second die and is configured from or otherwise includes an aluminum material. The shaped multi-layered preform is sintered using a field assisted sintering technology process to provide a bipolar plate for a fuel cell. The titanium material in the first material layer of the bipolar plate is bonded to the aluminum material in the second material layer of the bipolar plate during the sintering of the multi-layered preform.

According to still another aspect of the present disclosure, another method of manufacture is provided during which a multi-layered preform is pressed between a first die and a second die to provide a shaped multi-layered preform. The shaped multi-layered preform includes a first material layer, a second material layer and a third material layer. The first material layer and the third material layer each extend longitudinally and laterally along the second material layer with the second material layer between the first material layer and the third material layer. The first material layer contacts the first die and is configured from or otherwise includes a titanium material. The second material layer is configured from or otherwise includes an aluminum material. The third material layer contacts the second die and is also configured from or otherwise includes the titanium material. The shaped multi-layered preform is sintered using a field assisted sintering technology process to provide a bipolar plate for a fuel cell. The titanium material in the first material layer of the bipolar plate is bonded to the aluminum material in the second material layer of the bipolar plate during the sintering of the multi-layered preform. The titanium material in the third material layer of the bipolar plate is bonded to the aluminum material in the second material layer of the bipolar plate during the sintering of the multi-layered preform.

The following optional features may be applied to any of the above aspects.

The multi-layered preform may also include a third material layer lengthwise and widthwise overlapping the second material layer with the second material layer between the first material layer and the third material layer. The third material layer may also be configured from or otherwise include the titanium material. The titanium material in the third material layer of the bipolar plate may be bonded to the aluminum material in the second material layer of the bipolar plate during the sintering of the multi-layered preform.

The multi-layered preform may be sintered using a field assisted sintering technology process.

The multi-layered preform may be sintered at a temperature below a melting point of the aluminum material.

A thickness of the second material layer may be greater than a thickness of the first material layer.

The first material layer in the multi-layered preform may be or otherwise include a sheet of the titanium material.

The titanium material may be pure titanium.

The second material layer in the multi-layered preform may be or otherwise include a sheet of the aluminum material.

The second material layer in the multi-layered preform may be or otherwise include a layer of unbonded powder. The unbonded powder may be configured from or otherwise include the aluminum material.

The sintering of the multi-layered preform may also bond the layer of the unbonded powder together.

The second material layer in the multi-layered preform may be or otherwise include a layer of partially sintered powder. The partially sintered powder may be configured from or otherwise include the aluminum material.

The sintering of the multi-layered preform may also fully sinter the layer of the partially sintered powder together.

The aluminum material may be or otherwise include an aluminum alloy.

The aluminum material may be or otherwise include an alloy including aluminum, silicon and magnesium.

The clamping of the multi-layered preform between the first die and the second die may shape the multi-layered preform.

The multi-layered preform may have a straight line sectional geometry in a reference plane. The bipolar plate may have an undulating sectional geometry in the reference plane.

The method may also include assembling the bipolar plate with multiple other fuel cell components to form the fuel cell.

The fuel cell may be configured as or otherwise include a proton exchange membrane fuel cell.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a fuel cell system.
FIG. 2 is a partial schematic illustration of the fuel cell system at a fuel cell.
FIG. 3 is a partial perspective illustration of a bipolar plate.
FIG. 4 is a partial sectional illustration of the bipolar plate with a three-layer construction.
FIG. 5 is a partial sectional illustration of the bipolar plate with a two-layer construction.
FIG. 6 is a flow diagram of a method for manufacturing a fuel cell.
FIGS. 7A and 7B illustrate various steps for manufacturing the bipolar plate with the three-layer construction.
FIG. 8 illustrate a step for manufacturing the bipolar plate with the two-layer construction.
FIGS. 9 and 10 are sectional illustrations of portions of the fuel cell with various bipolar plate corrugation arrangements.

### DETAILED DESCRIPTION

The present disclosure includes methods for manufacturing one or more fuel cells. Mort particularly, the present disclosure includes methods for manufacturing one or more multi-layered bipolar plates for each of the one or more fuel cells.

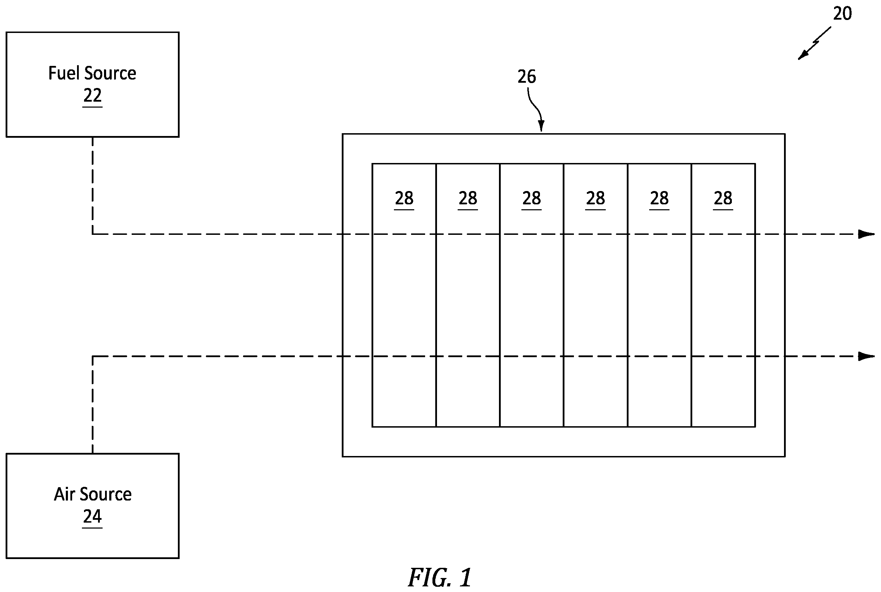

FIG. 1 illustrates a fuel cell system 20 for an aircraft. The aircraft may be an airplane, a rotorcraft (e.g., a helicopter), a drone (e.g., an unmanned aerial vehicle (UAV)), or any other manned or unmanned aerial vehicle and/or system. The fuel cell system 20 of the present disclosure, however, is not limited to aircraft applications. The fuel cell system 20, for example, may alternatively be configured for other types of mobile vehicles and/or systems such as, but not limited to, spacecraft, ground vehicles, aquatic vehicles, transportation trailers, shipping containers, or the like. In another example, the fuel cell system 20 may be configured for non-mobile applications such as, but not limited to, electrical powerplants, or the like. The fuel cell system 20 of FIG. 1 includes a fuel source 22 (e.g., a hydrogen source), an air source 24 (e.g., an ambient air source, an oxygen gas source, etc.) and a fuel cell stack 26. The fuel cell stack 26 includes a plurality of fuel cells 28 arranged side-by-side and electrically coupled together in an array.

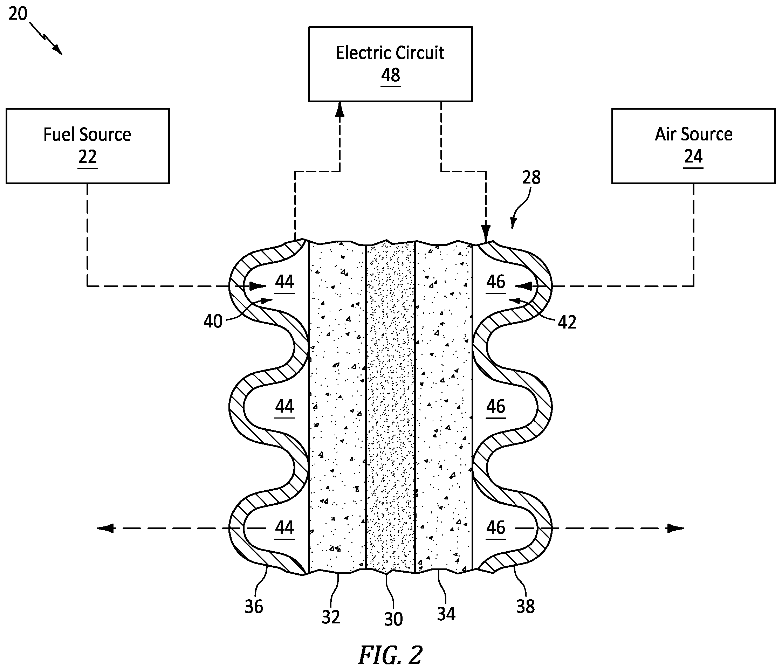

Referring to FIG. 2, each fuel cell 28 may be configured as a proton-exchange membrane (PEM) fuel cell. Each fuel cell 28 of FIG. 2, for example, includes a proton-exchange membrane 30, an anode catalyst 32, a cathode catalyst 34 and a set of bipolar plates 36 and 38. Briefly, the proton-exchange membrane 30 is electrically non-conductive and is permeable to hydrogen ions (H⁺). Each fuel cell 28 also includes a fuel passage 40 and an air passage 42, where each of these passages 40 and 42 extends through the respective fuel cell 28.

The proton-exchange membrane 30 is disposed between and may contact an interior side of the anode catalyst 32 and an interior side of the cathode catalyst 34. This proton-exchange membrane 30 thereby separates the anode catalyst 32 from the cathode catalyst 34. The anode-side bipolar plate 36 is disposed next to, is electrically coupled with and may contact an exterior side of the anode catalyst 32, where the anode catalyst 32 is between the anode-side bipolar plate 36 and the proton-exchange membrane 30. The anode-side bipolar plate 36 is configured with one or more fuel channels 44. These fuel channels 44 collectively form the fuel passage 40 between and along the anode-side bipolar plate 36 and the anode catalyst 32. This fuel passage 40 is fluidly coupled to and downstream of the fuel source 22 (see FIG. 1). Similarly, the cathode-side bipolar plate 38 is disposed next to, is electrically coupled with and may contact an exterior side of the cathode catalyst 34, where the cathode catalyst 34 is between the cathode-side bipolar plate 38 and the proton-exchange membrane 30. The cathode-side bipolar plate 38 is configured with one or more air channels 46. These air channels 46 collectively form the air passage 42 between and along the cathode-side bipolar plate 38 and the cathode catalyst 34. This air passage 42 is fluidly coupled to and downstream of the air source 24 (see FIG. 1).

During fuel cell operation, the fuel passage 40 and its fuel channels 44 receive fuel (e.g., hydrogen (H₂) gas) from the fuel source 22 (see FIG. 1). Simultaneously, the air passage 42 and its air channels 46 receive air (e.g., ambient air or oxygen (O₂) gas) from the air source 24 (see FIG. 1). At the anode catalyst 32, the fuel is decomposed into electrons and hydrogen ions (H⁺). The electrons are conducted out of the anode catalyst 32, through the anode-side bipolar plate 36, an electric circuit 48 and the cathode-side bipolar plate 38, to the cathode catalyst 34. The conduction of the electrons through the electric circuit 48 generates an electrical power output from the respective fuel cell 28. The hydrogen ions, by contrast, migrate across the proton-exchange membrane 30 to the cathode catalyst 34. At the cathode catalyst 34, oxygen from the air reacts with the hydrogen ions and the electrons to generate water. This water along with a quantity of excess (unused) air is then exhausted from the respective fuel cell 28 and its air passage 42. Simultaneously, excess fuel is exhausted from the respective fuel cell 28 and its fuel passage 40.

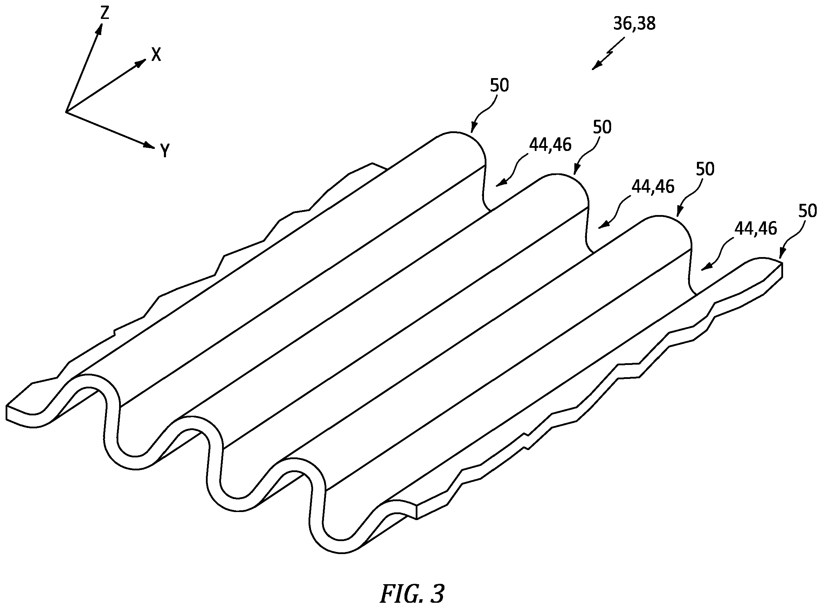

Referring to FIG. 3, each bipolar plate 36, 38 may extend longitudinally (e.g., lengthwise) along a longitudinal x-axis, laterally (e.g., widthwise) along a lateral y-axis, and vertically (e.g., depthwise) along a vertical z-axis. Each bipolar plate 36, 38 may be configured with one or more corrugations 50 to partially form the respective flow channels 44, 46 in and along that bipolar plate 36, 38. The corrugations 50 of FIG. 3 are arranged in a laterally extending array, where each corrugation 50 extends longitudinally along the respective bipolar plate 36, 38. With this arrangement, each bipolar plate 36, 38 may have an undulating (e.g., wavy, sinusoidal, channeled, etc.) sectional geometry when viewed, for example, in a reference plane perpendicular to the x-axis / parallel with a y-z plane.

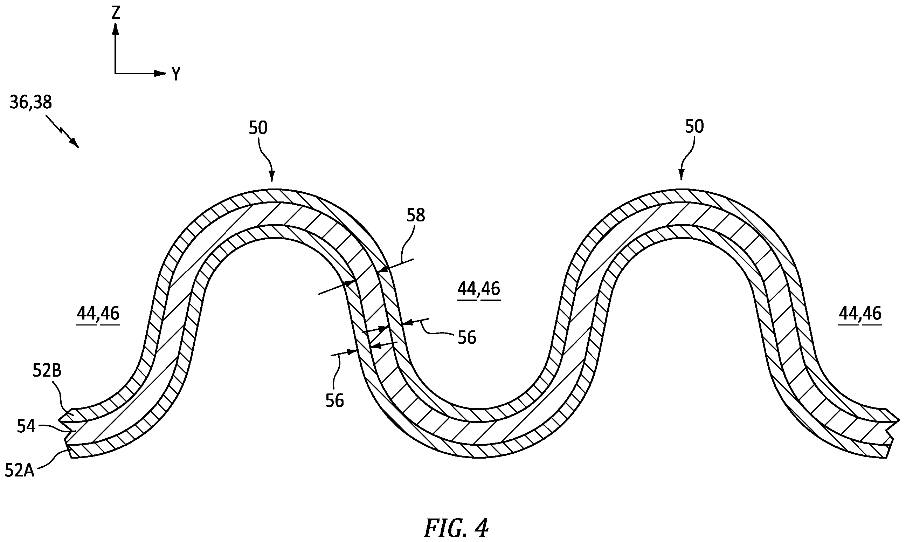

Referring to FIG. 4, each bipolar plate 36, 38 may be configured as a multi-layered bipolar plate. Each bipolar plate 36, 38 of FIG. 4, for example, includes a plurality of exterior titanium layers 52A and 52B (generally referred to as "52") and an intermediate aluminum layer 54, where the aluminum layer 54 is disposed between and bonded to the titanium layers 52. Each of the titanium layers 52 is constructed from or otherwise includes titanium material; e.g., pure titanium (Ti) or a titanium alloy. The aluminum layer 54 is constructed from or otherwise includes aluminum material; e.g., pure aluminum (Al) or an aluminum alloy. An example of the aluminum alloy is an alloy including aluminum (Al), silicon (Si) and magnesium (Mg); e.g., AlSi₁₀Mg. Here, the aluminum layer 54 provides a relatively light-weight and inexpensive base for the respective bipolar plate 36, 38, where this bipolar plate base is clad by the titanium layers 52 to provide the respective bipolar plate 36, 38 improved corrosion resistance. Providing the respective bipolar plate 36, 38 with such a multi-layered construction may (e.g., significantly) reduce the cost and/or the weight of the respective fuel cell 28, as compared to a fuel cell with titanium bipolar plates or stainless steel bipolar plates. For example, titanium may have a density of 4.5g/cm³ and stainless steel may have a density of 7.9g/cm³, whereas aluminum may have a density of 2.7g/cm³. Aluminum also has a relatively high strength-to-weight ratio, a relatively low base material cost, and is relatively formable. While aluminum may have a relatively low corrosion resistance, the titanium layers 52A and 52B protect the aluminum layer 54 of each bipolar plate 36, 38 from corrosion.

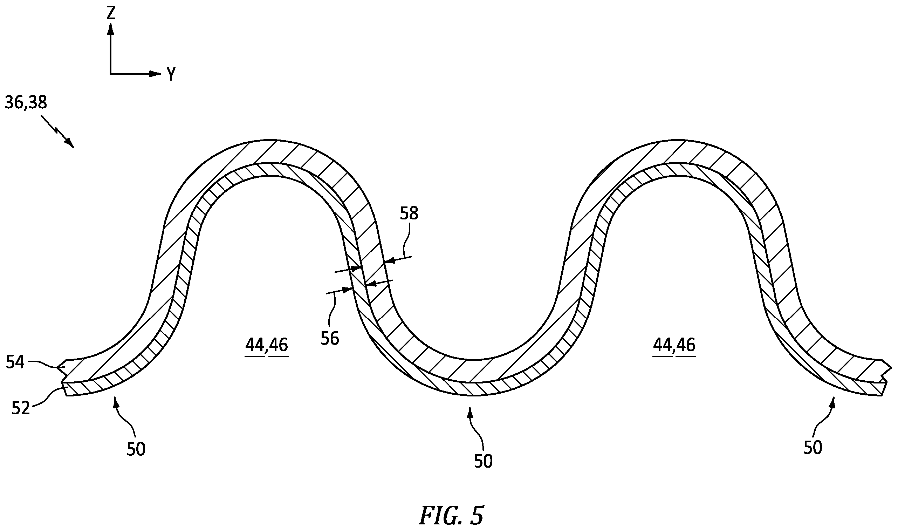

While the aluminum layer 54 of FIG. 4 is clad on both side by the titanium layers 52, the present disclosure is not limited to such an exemplary construction. For example, referring to FIG. 5, the aluminum layer 54 may alternatively (e.g., only) be clad by a single titanium layer 52 to the respective side which forms the flow channels 44, 46 and may contact the catalyst 32, 34 (see FIG. 2). Such a construction may further reduce the costs and/or the manufacturing complexity of the respective fuel cell 28.

Referring to FIGS. 4 and 5, each titanium layer 52 has a respective thickness 56. The thicknesses 56 of the titanium layers 52 in FIG. 4 may be equal. The aluminum layer 54 of FIGS. 4 and 5 has a thickness 58. This thickness 58 of the aluminum layer 54 may be equal to or larger than the thickness 56 of each titanium layer 52. In particular, it may be advantageous to size the aluminum layer thickness 58 larger (e.g., 2x, 5x, etc.) the titanium layer thickness 56 to reduce a quantity of the relatively expensive titanium used for constructing the respective bipolar plate 36, 38. The present disclosure, however, is not limited to such an exemplary dimensional relationship between the bipolar plate layers.

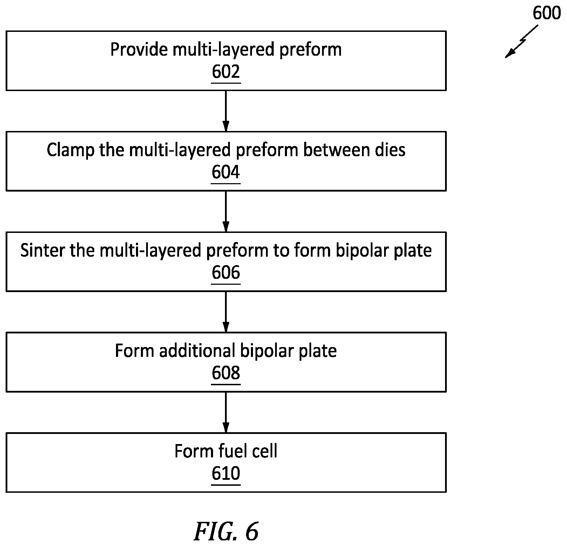

FIG. 6 is a flow diagram of a method 600 for manufacturing a fuel cell. For ease of description, this method of manufacturing 600 is described below with reference to the fuel cell 28 of FIG. 2 and the bipolar plates 36 and 38 of FIGS. 3 and 4. The present disclosure, however, is not limited to manufacturing such an exemplary fuel cell nor to manufacturing such exemplary bipolar plates.

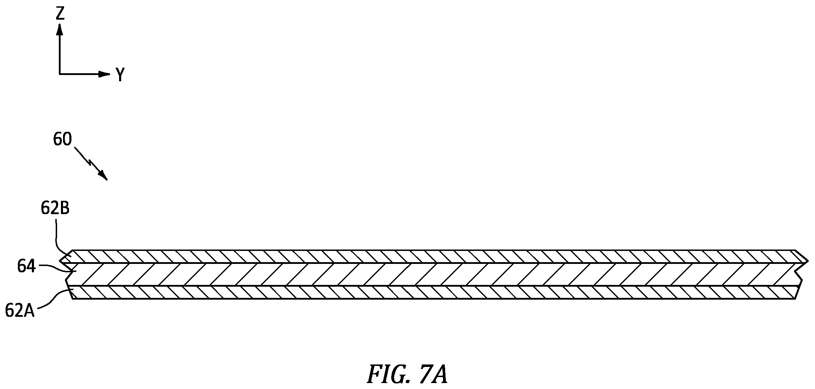

In step 602, referring to FIG. 7A, a multi-layered preform 60 is provided. This multi-layered preform 60 is a stack / layup of multiple layers of material. The multi-layered preform 60 of FIG. 7A, for example, includes a bottom layer 62A of the titanium material ("bottom titanium layer"), a top layer 62B of the titanium material ("top titanium layer") and an intermediate layer 64 of the aluminum material ("intermediate aluminum layer"). The bottom titanium layer 62A is disposed at a bottom side of the multi-layered preform 60 of FIG. 7A. The top titanium layer 62B is disposed at a top side of the multi-layered preform 60 of FIG. 7A. The intermediate aluminum layer 64 is disposed between and adjacent the bottom titanium layer 62A and the top titanium layer 62B.

In the step 602, the intermediate aluminum layer 64 is not yet bonded to the bottom titanium layer 62A or the top titanium layer 62B. For example, to provide the multi-layered preform 60, the intermediate aluminum layer 64 may be deposited, placed, and/or otherwise disposed onto a top of the bottom titanium layer 62A. The top titanium layer 62B may then be disposed onto a top of the intermediate aluminum layer 64.

Each titanium layer 62A, 62B (generally referred to as "62") may be formed by (or otherwise include) a single sheet of the titanium material; e.g., the pure titanium or the titanium alloy. The intermediate aluminum layer 64 may be formed by (or otherwise include) a single sheet of the aluminum material; e.g., the pure aluminum or the aluminum alloy. Alternatively, the intermediate aluminum layer 64 may be formed by (or otherwise include) a single layer of partially sintered powder, where the partially sintered powder is formed from the aluminum material; e.g., partially sintered aluminum material powder. Still alternatively, the intermediate aluminum layer 64 may be formed by (or otherwise include) a single layer of unbonded powder, where the unbonded powder is formed from the aluminum material; e.g., unbonded aluminum material powder. Note, while each multi-layered preform layer 62A, 62B, 64 is described above as being formed from a single layer of respective material, it is contemplated one or more or all of the multi-layered preform layers 62A, 62B, 64 may alternatively be formed by a stack of multiple layers of the respective material.

The multi-layered preform 60 may have a (e.g., flat) planar geometry. The multi-layered preform 60 of FIG. 7A, for example, has a straight line sectional geometry when viewed, for example, in the reference plane.

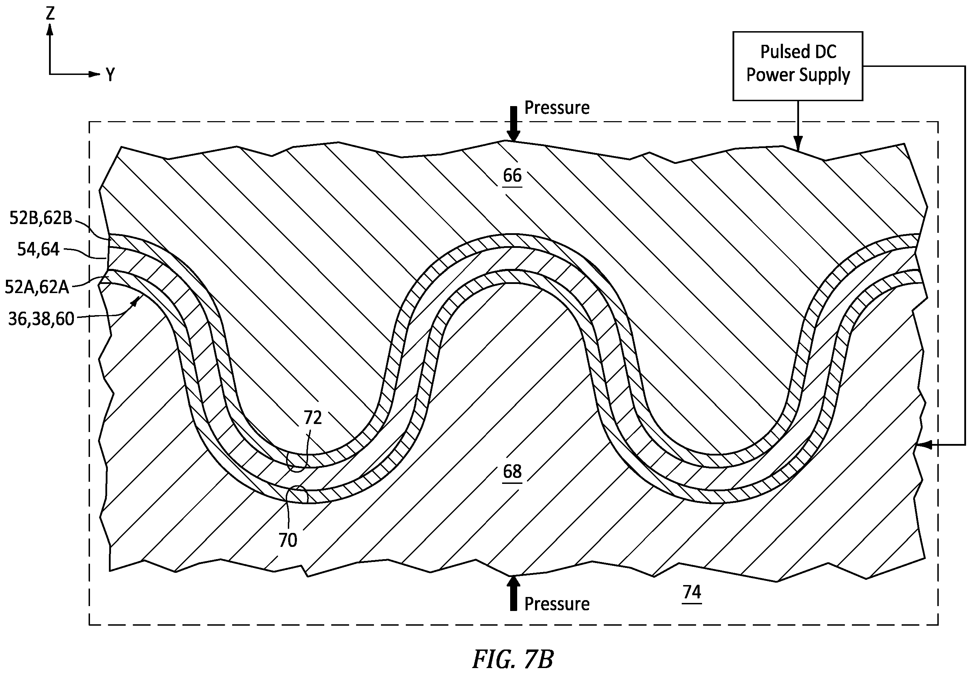

In step 604, referring to FIG. 7B, the multi-layered preform 60 is clamped (e.g., pressed) between a top die 66 and a bottom die 68. The multi-layered preform 60, for example, is arranged in a gap between the top die 66 and the bottom die 68. The top die 66 is subsequently moved down towards the bottom die 68 and/or the bottom die 68 is moved up towards the top die 66 to press the multi-layered preform 60 between the top die 66 and the bottom die 68. Here, the bottom titanium layer 62A is above, next to and may contact a top die surface 70 of the bottom die 68. The top titanium layer 62B is below, next to and may contact a bottom die surface 72 of the top die 66. As the multi-layered preform 60 is clamped between the top die 66 and the bottom die 68, the multi-layered preform 60 is shaped (e.g., die stamped) to take on contours of the top die surface 70 and the bottom die surface 72. The multi-layered preform 60 may thereby be shaped into a geometry of the respective to-be-formed bipolar plate 36, 38 (see FIG. 4). The now shaped multi-layered preform 60 of FIG. 7B, for example, has the undulating sectional geometry when viewed, for example, in the reference plane.

The top die 66 and the bottom die 68 may each be constructed from a thermally conductive material. The top die 66 and the bottom die 68, for example, may each be constructed from or otherwise include graphite.

In step 606, the now shaped multi-layered preform 60 is sintered to form a respective bipolar plate 36, 38. The multi-layered preform 60, for example, may be sintered together using a field assisted sintering technology (FAST) process to bond the intermediate aluminum layer 64 to each of the titanium layers 62. In addition, where the intermediate aluminum layer 64 is formed from the partially sintered powder, the sintering may fully sinter the powder together. Where the intermediate aluminum layer 64 is formed from the unbonded powder, the sintering may fully sinter the unbonded powder together. During the sintering process (e.g., the FAST process), the multi-layered preform 60 is biased between the top die 66 and the bottom die 68 to subject the multi-layered preform 60 and its titanium and aluminum material to an elevated pressure. The multi-layered preform 60 is also conductively heated through the top die 66 and the bottom die 68 to subject the multi-layered preform 60 and its titanium and aluminum material to an elevated temperature. This temperature is selected to be below a melting point of the aluminum material such that neither the aluminum material nor the titanium material melts during the sintering process. Utilizing the FAST process may facilitate formation of the respective bipolar plate 36, 38 in the matter of minutes rather than multiple hours or even days with a traditional diffusion bonding process.

While the step 606 is described above as being discrete from the step 604, pressure is applied to the materials between the dies 66 and 68 during the sintering step 606. For example, during the sintering step 606, a uniaxial pressure and an electric current is synchronously applied to consolidate loose and/or partially sintered powder, or multi-layer sheets with a specified configuration and density. The electric current is applied to the multi-layered preform 60 and its materials through the electrically conductive dies 66 and 68; e.g., graphite dies. Here, local joule heating facilitates bonding of interfaces between the materials, for example without use of filler metals, melting, transient liquid phases, and/or significant heat affected zones. By using the FAST process, the sintering and bonding of the materials may occur rapidly; e.g., with cycle times of a few tens of minutes or less. In addition, the dies 66 and 68 and the multi-layered preform 60 may be arranged in a controlled environment 74. This controlled environment 74 may be under vacuum and/or may have a protective atmosphere of inert gas (e.g., H₂, N₂, or argon gas) to maintain phase stability and avoid oxidation, especially for metallic materials. Of course, the present disclosure is not limited to performing the steps 604 and 606 in sequential order. For example, in other embodiments, it is contemplated the steps 604 and 606 may be performed concurrently. In other words, it is contemplated the sintering of the multi-layered preform 60 may be performed as the multi-layered preform 60 is also being shaped.

In step 608, the steps 602, 604 and 606 may be repeated to form the other bipolar plate 38, 36.

In step 610, the bipolar plates 36 and 38 and the other fuel cell components 30, 32 and 34 are arranged and assembled together to form a respective fuel cell 28. This foregoing process may then be repeated to form one or more additional fuel cells 28 for the fuel cell system 20 of FIG. 1.

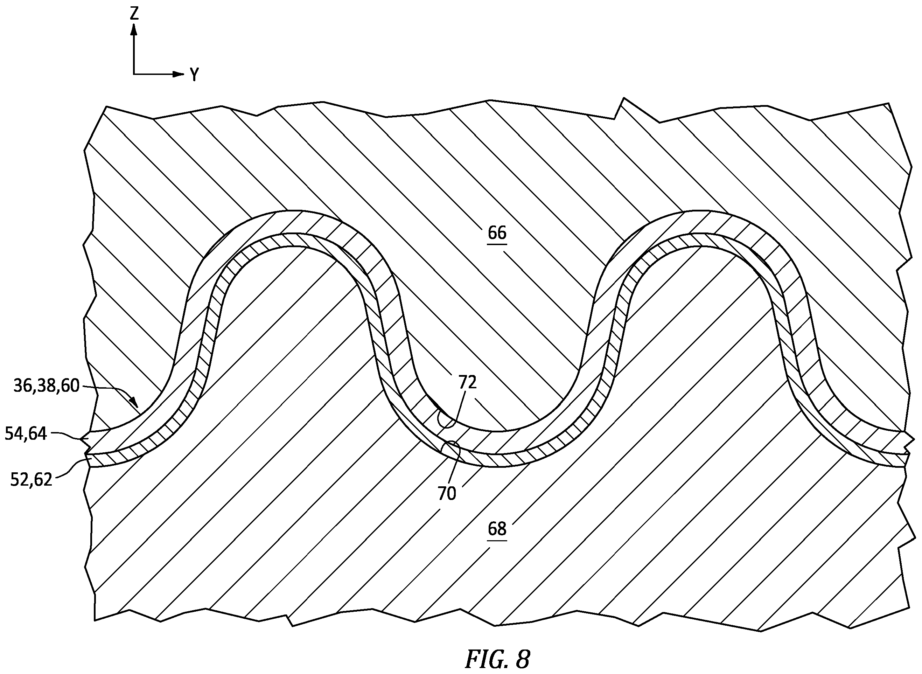

While the method of manufacturing 600 is described above as forming each bipolar plate 36, 38 with multiple titanium layers 52 cladding the aluminum layer 54, the method of manufacturing 600 of the present disclosure is not limited thereto. For example, the method of manufacturing 600 may also be performed to form one or both bipolar plates 36 and 38 with a single titanium layer 52 as shown in FIG. 5. For example, referring to FIG. 8, the method of manufacturing 600 may be performed without providing the top titanium layer 62B (or the bottom titanium layer 62A). In such embodiments, while the remaining titanium layer 62 is next to and may contact one of the dies (e.g., 68), the aluminum layer 64 is next to and may contact the other one of the dies (e.g., 66), or vice versa.

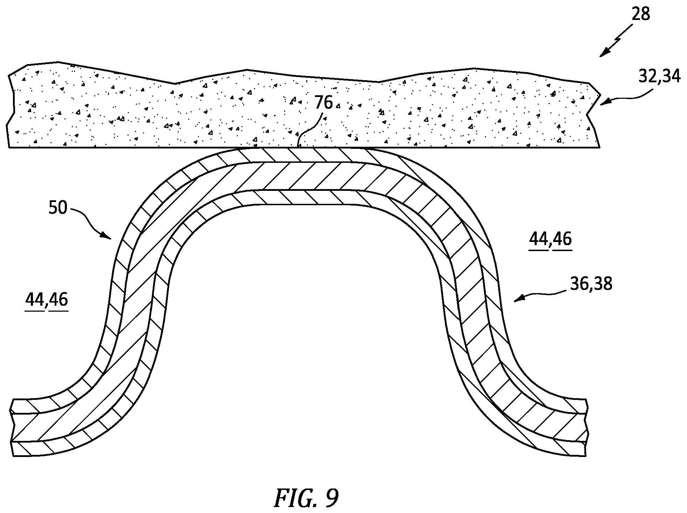

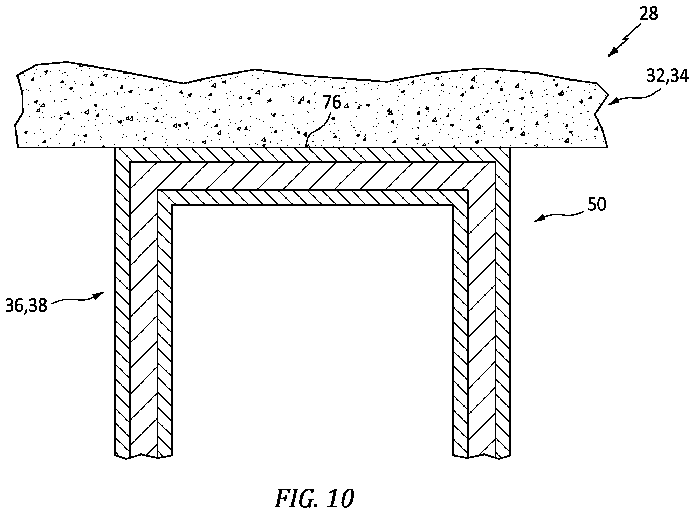

In some embodiments, referring to FIG. 9, each corrugation 50 may be configured with a flat 76 to increase surface contact and reduce contact resistance between each bipolar plate 36, 38 and the respective catalyst 32, 34. In other embodiments, referring to FIG. 10, each corrugation 50 may be provided with a polygonal cross-sectional geometry.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A method of manufacture, comprising:
disposing a first material layer (62A) with a second material layer (64) to provide a multi-layered preform (60), the first material layer (62A) lengthwise and widthwise overlapping the second material layer (64), the first material layer (62A) comprising a titanium material, and the second material layer (64) comprising an aluminum material;
clamping the multi-layered preform (60) between a first die (66) and a second die (68), the first die (66) and the second die (68) each lengthwise and widthwise overlapping the multi-layered preform (60); and
sintering and bonding the multi-layered preform (60) clamped between the first die (66) and the second die (68) to provide a bipolar plate (36; 38) for a fuel cell (28), wherein the titanium material in the first material layer (62A) of the bipolar plate (36; 38) is bonded to the aluminum material in the second material layer (64) of the bipolar plate (36; 38) during the sintering of the multi-layered preform (60).

2. The method of claim 1, wherein:
the multi-layered preform (60) further includes a third material layer (62B) lengthwise and widthwise overlapping the second material layer (64) with the second material layer (64) between the first material layer (62A) and the third material layer (62B);
the third material layer (62B) further comprises the titanium material; and
the titanium material in the third material layer (62B) of the bipolar plate (36; 38) is bonded to the aluminum material in the second material layer (64) of the bipolar plate (36; 38) during the sintering of the multi-layered preform (60).

3. The method of claim 1 or 2, wherein the multi-layered preform (60) is sintered using a field assisted sintering technology process.

4. The method of claim 1, 2 or 3, wherein the multi-layered preform (60) is sintered at a temperature below a melting point of the aluminum material.

5. The method of any preceding claim, wherein a thickness (58) of the second material layer (64) is greater than a thickness (56) of the first material layer (62A).

6. The method of any preceding claim, wherein:
the first material layer (62A) in the multi-layered preform (60) comprises a sheet of the titanium material; and/or
the titanium material is pure titanium.

7. The method of any preceding claim, wherein the second material layer (64) in the multi-layered preform (60) comprises a sheet of the aluminum material.

8. The method of any of claims 1 to 6, wherein the second material layer (64) in the multi-layered preform (60) comprises a layer of unbonded powder, and the unbonded powder comprises the aluminum material,
wherein, optionally, the sintering of the multi-layered preform (60) further bonds the layer of the unbonded powder together.

9. The method of any of claims 1 to 6, wherein the second material layer (64) in the multi-layered preform (60) comprises a layer of partially sintered powder, and the partially sintered powder comprises the aluminum material,
wherein, optionally, the sintering of the multi-layered preform (60) further fully sinters the layer of the partially sintered powder together.

10. The method of any preceding claim, wherein:
the aluminum material comprises an aluminum alloy; and/or
the aluminum material comprises an alloy including aluminum, silicon and magnesium.

11. The method of any preceding claim, wherein the clamping of the multi-layered preform (60) between the first die (66) and the second die (68) shapes the multi-layered preform (60).

12. The method of any preceding claim, wherein:
the multi-layered preform (60) has a straight line sectional geometry in a reference plane; and
the bipolar plate (36; 38) has an undulating sectional geometry in the reference plane.

13. The method of any preceding claim, further comprising assembling the bipolar plate (36; 38) with multiple other fuel cell components (30) to form the fuel cell (28),
wherein, optionally, the fuel cell (28) comprises a proton exchange membrane fuel cell (28).

14. A method of manufacture, comprising:
pressing a multi-layered preform (60) between a first die (66) and a second die (68) to provide a shaped multi-layered preform (60), the shaped multi-layered preform (60) including a first material layer (62A) and a second material layer (64), the first material layer (62A) extending longitudinally and laterally along the second material layer (64), the first material layer (62A) contacting the first die (66) and comprising a titanium material, and the second material layer (64) contacting the second die (68) and comprising an aluminum material; and
sintering the shaped multi-layered preform (60) using a field assisted sintering technology process to provide a bipolar plate (36; 38) for a fuel cell (28), wherein the titanium material in the first material layer (62A) of the bipolar plate (36; 38) is bonded to the aluminum material in the second material layer (64) of the bipolar plate (36; 38) during the sintering of the multi-layered preform (60).

15. A method of manufacture, comprising:
pressing a multi-layered preform (60) between a first die (66) and a second die (68) to provide a shaped multi-layered preform (60), the shaped multi-layered preform (60) including a first material layer (62A), a second material layer (64) and a third material layer (62B), the first material layer (62A) and the third material layer (62B) each extending longitudinally and laterally along the second material layer (64) with the second material layer (64) between the first material layer (62A) and the third material layer (62B), the first material layer (62A) contacting the first die (66) and comprising a titanium material, the second material layer (64) comprising an aluminum material, and the third material layer (62B) contacting the second die (68) and also comprising the titanium material; and
sintering the shaped multi-layered preform (60) using a field assisted sintering technology process to provide a bipolar plate (36; 38) for a fuel cell (28), wherein the titanium material in the first material layer (62A) of the bipolar plate (36; 38) is bonded to the aluminum material in the second material layer (64) of the bipolar plate (36; 38) during the sintering of the multi-layered preform (60), and wherein the titanium material in the third material layer (62B) of the bipolar plate (36; 38) is bonded to the aluminum material in the second material layer (64) of the bipolar plate (36; 38) during the sintering of the multi-layered preform (60).
